# FASCICULE DE BREVET EUROPEEN

(11) **EP 1 036 456 B1**
(45) Date de publication et mention de la délivrance du brevet: **27.08.2003**
(21) Numéro de dépôt: 98958302.6
(22) Date de dépôt: 02.12.1998
(51) Int. Cl.: H04L 29/06

(54) **METHODE DE COMMUNICATION CLIENT-SERVEUR AVEC RESEAUX PARALLELES**
BENUTZER-ANBIETER KOMMUNIKATIONSVERFAHREN DURCH PARALLELE NETZE
METHOD FOR CLIENT SERVER COMMUNICATION WITH PARALLEL NETWORKS

(30) Priorité: 03.12.1997 FR 9715208
(43) Date de publication de la demande: 20.09.2000
(73) Titulaire: SAGEM S.A., 75116 Paris (FR)
(72) Inventeur: BORU, Bruno, F-75626 Paris Cedex 13 (FR)
(74) Mandataire: Bloch, Gérard
(86) Numéro de dépôt international: FR9802593
(87) Numéro de publication internationale: WO99029080

(56) Documents cités:
- WO-A-95/34153

## Description

L'établissement d'une liaison de transmission de données entre un appareil et un serveur s'effectue en général à travers un réseau commuté, qui fournit une liaison bidirectionnelle sur laquelle transite la réponse du serveur.

Il en est ainsi par exemple pour les terminaux de la marque protégée MINITEL, à travers le réseau téléphonique commuté, RTC.

Le volume de données en réponse est en général bien supérieur à celui des données d'interrogation émises par terminal, si bien que ce sont ces données de réponse qui pratiquement déterminent la durée de la communication.

Si l'on considère un réseau à plus grande vitesse de transmission, comme l'INTERNET, on peut évidemment, toutes choses égales, transmettre plus de données. Cependant, les utilisateurs veulent toujours plus de données et sans attente excessive, ce qui est contradictoire avec la capacité limitée du réseau, qui va donc se saturer et entraîner des retards dans la réception des réponses téléphonique autant qu'Internet, dus à leur délai d'acheminement ainsi qu'au délai d'acheminement des interrogations.

WO-95 34 153A enseigne de relier, en émission, un appareil de transmission de données à l'INTERNET pour y interroger un serveur, qui répond à travers un système de diffusion par satellite, à haut débit. Cela. permet certes de s'affranchir des limitations, évoquées ci-dessus, du réseau commuté, INTERNET ou autre, mais la gestion de l'adressage de l'appareil dans les deux réseaux, commuté et à diffusion, nécessité des traitements complexes pour protéger des données d'adresses lorsqu'elles traversent le réseau qui n'est pas concerné par cette adresse.

La présente invention vise à simplifier cette gestion.

A cet effet, l'invention concerne un procédé de liaison selon la revendication 1.

Ainsi, les deux réseaux forment fonctionnellement un seul réseau intégré, si bien qu'une même adresse d'appareil y est partout exploitables sans donc nécessité de l'adapter ou la protéger dans l'un ou l'autre des réseaux.

Avantageusement, lorsque l'appareil dispose d'au moins une autre adresse,- pour une autre liaison avec un réseau autre,
- on détecte cycliquement l'état, actif ou repos, de chaque adresse,
- on détecte cycliquement l'état, actif ou repos, de chaque liaison, .
- on recherche une corrélation temporelle entre l'état de chaque adresse et l'état de chaque liaison, et
- on associe chaque adresse à celle des liaisons qui présente avec elle la meilleure corrélation, pour déterminer l'adresse de réception à utiliser sur le réseau de diffusion.

On peut ainsi s'affranchir de l'incertitude d'adresse due à la présence d'un réseau local lorsque, dans l'appareil, les circuits gestionnaires des liaisons avec les réseaux utilisent des couches logicielles ne fournissant pas, de façon simple, l'adresse utilisée par chaque liaison.

L'invention sera mieux comprise à l'aide de la description suivante d'un mode de mise en oeuvre préféré du procédé de l'invention, en référence au dessin annexé, sur lequel :
- la figure 1 représente schématiquement une architecture d'ensemble comportant un appareil de transmission de données et un serveur, tous deux reliés à un réseau à commutation et à un réseau à diffusion, pour la mise en oeuvre du procédé de l'invention, et
- la figure 2 est un organigramme explicitant le procédé.

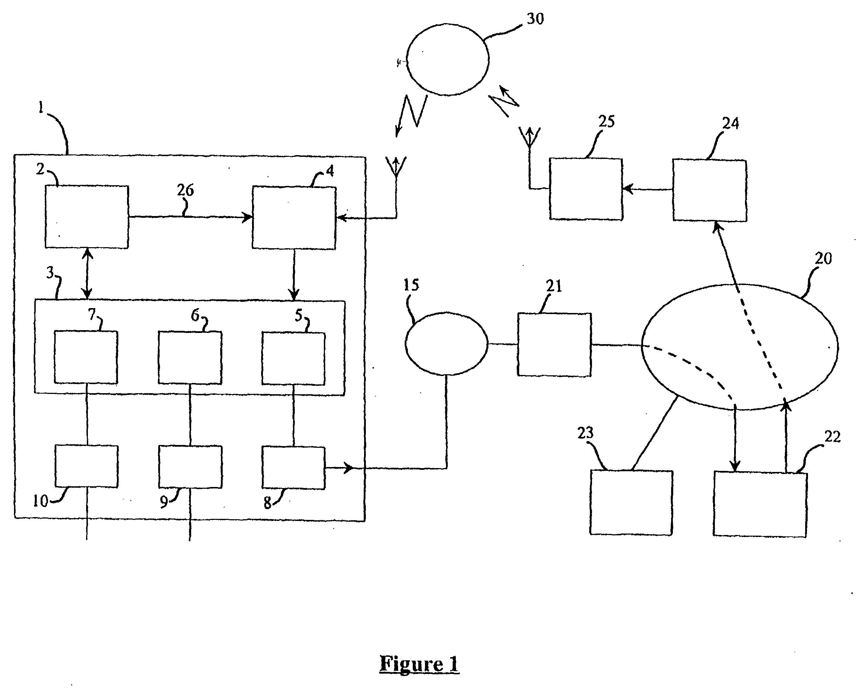

Sur la figure 1, un appareil 1 de transmission de données et un serveur 22 sont tous deux reliés à un réseau de transmission de données à commutation 20, ici le réseau INTERNET, et à un réseau à diffusion, ici hertzienne par un satellite 30. Une diffusion par câble est également envisageable.

Plus précisément, l'appareil 1 est un PC comportant un ensemble 2 de circuits pour un logiciel d'application INTERNET, par exemple de la marque protégée Netscape ou Internet Explorer. Les circuits 2 sont en liaison bidirectionnelle avec un ensemble de circuits 3 de gestion du protocole TCP/IP, avec des circuits 5 d'adresse INTERNET, gérant les communications sur la liaison INTERNET, à travers un modem 8. Celui-ci est relié au réseau INTERNET 20, de façon indirecte dans cet exemple, par une ligne, de transmission de données, du réseau téléphonique commuté 15 le reliant à un concentrateur 21 fournisseur d'accès à l'INTERNET 20. Il est ici prévu un autre serveur 23 de l'INTERNET 20, fournissant des adresses de serveurs d'après leur nom. Au serveur 22 est en outre relié, ici à travers l'INTERNET 20, un routeur satellite 24 commandant un émetteur de données à diffuser 25 pointé sur le satellite 30.

Dans le PC 1, une carte 4 de réception de liaison satellite alimente en données l'ensemble 3 et est contrôlée par une liaison sortante d'adresse, référencée 26, de l'ensemble 2. La carte ou port d'entrée 4 comporte un récepteur tuner, relié en entrée à une antenne parabolique, avec en sortie des circuits de décodage permettant la correction d'erreurs de transmission. En aval, un démultiplexeur alimente, à travers un filtre, une interface restituant des paquets IP (Protocole INTERNET) de données INTERNET. Une réception d'images par paquets à la norme MPEG2 est ici prévue.

Dans cet exemple, le PC 1 est aussi relié à un réseau local, par une carte d'interface 9 associée à des circuits d'adresse 6 de l'ensemble 3, et à un autre réseau par une carte d'interface 10 associée à des circuits d'adresse 7 de l'ensemble 3.

Le procédé pour établir une liaison entre le PC 1 et le serveur 22, afin de transmettre à celui-là une réponse du serveur 22, prévoit de relier le PC 1 à l'INTERNET 20 par la ligne (15) de transmission de données exclusivement en émission et par le réseau de diffusion 30 exclusivement en réception.

Une adresse d'identification du PC 1 lui est fournie par le réseau INTERNET 20, et, depuis le PC 1, on appelle le serveur 22 par l'INTERNET 20, ce dernier transmettant au serveur 22 l'adresse du PC 1, puis le serveur 22 transmet, au réseau de diffusion 30, par transmission au routeur 24, une réponse correspondante comportant ladite adresse, et - on détecte, dans le PC 1, la réponse diffusée en sélectionnant celle des réponses qui comporte l'adresse (IP1) du PC 1 parmi un ensemble de réponses diffusées comprenant aussi des réponses à d'autres appareils.

Les trois interfaces réseau ou ports (8, 9, 10) utilisent ici le même protocole TCP/IP, Protocole de Contrôle de Transport/Protocole Internet, avec des adresses INTERNET de même format, appelées IP par la suite.

Comme les échanges avec les réseaux ci-dessus sont régis par des logiciels spécifiques et autonomes, il est extrêmement complexe de savoir où est physiquement rangée l'adresse IP utilisée par chacun. La seule information connue à ce sujet est le fait qu'une adresse IP, que l'on peut alors lire, est active, sans qu'on sache l'associer à l'un des trois ports 8, 9, 10.

Or, il faut connaître l'adresse INTERNET, IP1, associée au modem 8, pour l'appliquer sur la liaison de filtrage 26, qui établit la liaison de retour en sélectionnant la réponse diffusée du serveur 22, destinée au PC 1 et comportant à cet effet l'adresse IP1.

En outre, ici, le PC 1 ne dispose pas d'une adresse IP1 permanente, ou statique, puisqu'il est relié à l'INTERNET 20 à travers le fournisseur d'accès 21, qui lui communique, à chaque appel, une adresse IP 1 provisoire, dynamique.

Afin de déterminer quelle est l'adresse IP à appliquer (26) en réception dans le PC 1,
- on détecte cycliquement l'état, actif ou repos, de chaque adresse IP du PC,
- on détecte cycliquement l'état, actif ou repos, de chaque liaison 4, 9, 10,
- on recherche une corrélation temporelle entre l'état de chaque adresse IP et l'état de chaque liaison 4, 9, 10, et
- on associe chaque adresse à celle des liaisons qui présente avec elle la meilleure corrélation, pour déterminer l'adresse IP1 à utiliser en réception sur le réseau de diffusion 30.

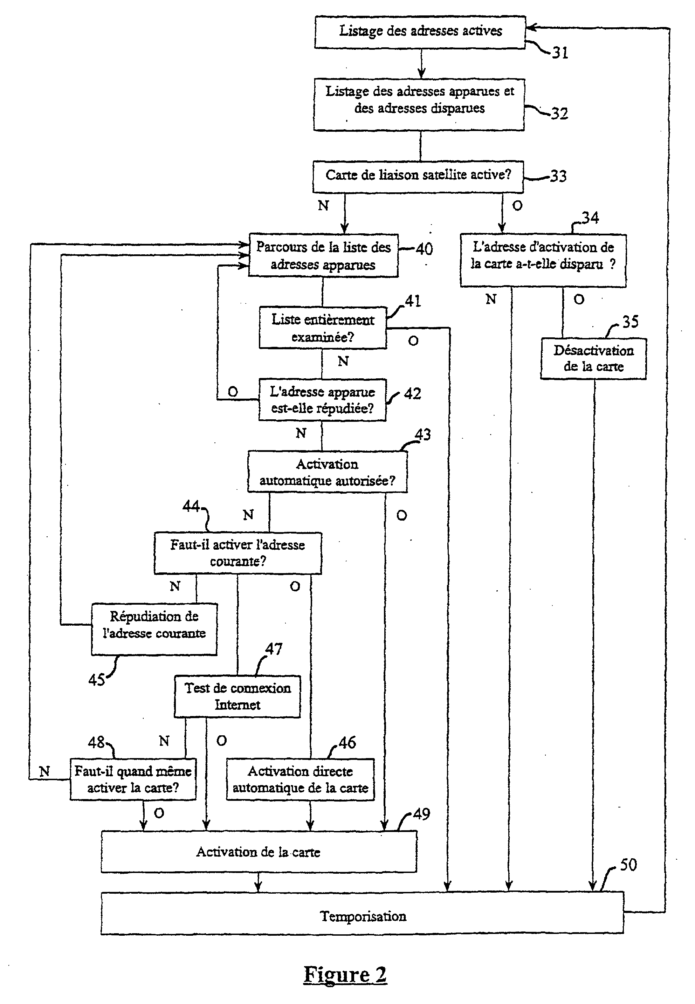

L'organigramme de la figure 2 illustre plus en détail la façon de sélectionner l'adresse IP1 de réception satellite. Dans le PC 1, à une étape 31, on établit la liste des adresses IP actives et, à une étape 32, la liste des adresses IP apparues et de celles qui ont disparu, entre deux échantillonnages d'un cycle continu d'échantillonnages. A une étape 33, on examine si la carte 4 est active (26), c'est-à-dire si elle a été activée à un cycle précédent pour recevoir des données diffusées, en sélectionnant celles associées à l'adresse IP appropriée.

Dans l'affirmative, il faut donc décider de désactiver la carte 4 de liaison satellite (et du modem 8) si son adresse a disparu de la liste des adresses IP actives. On examine donc, à une étape 34, si l'adresse d'activation de la carte 4 a disparu (32), pour, en pareil cas, désactiver la carte 4 et la mettre à l'état repos, étape 35, et, sinon, on n'effectue aucune action de modification et passe à une étape 50 de temporisation de 3 secondes qui se poursuit par un nouveau cycle débutant à l'étape 31.

Dans la négative, à l'étape 33, il s'agit de savoir s'il faut activer la carte 4 si une nouvelle adresse IP active est apparue, en lui attribuant cette adresse. Pour cela, on parcourt, à une étape 40, la liste des adresses IP apparues (32) pour examiner, à une étape 42, s'il s'agit d'une adresse IP "répudiée", comme expliqué plus loin pour une étape 45. A une étape 41, on est préalablement passé à l'étape de temporisation 50 si la liste (40) a été entièrement examinée. Bref, on cherche cycliquement à mettre en conformité l'état de la carte 4 avec l'état des adresses et en particulier de l'adresse INTERNET IP1.

A une étape 43, on teste si l'utilisateur du PC 1 autorise une activation automatique, c'est-à-dire que la première adresse IP examinée, éligible pour la carte 4, est alors considérée comme élue pour représenter l'adresse IP1 d'INTERNET. Dans l'affirmative, on active la carte 4 à une étape 49 qui se poursuit par l'étape 50. Sinon, on passe à une étape 44 d'interrogation de l'utilisateur du PC 1 (écran/clavier) pour savoir s'il faut activer l'adresse IP courante (40). Si la réponse est négative, on passe à l'étape 45, de répudiation de cette adresse, rebouclée sur l'étape 40. En cas de réponse positive, on passe à une étape 46 d'activation directe automatique de la carte 4, si l'utilisateur le prévoit. Autrement, l'étape 44 se poursuit par une étape 47 de test de connexion INTERNET consistant à émettre un message-stimulus pour détecter qu'on reçoit une réponse par la carte 4, comme détaillé plus loin, afin de valider l'adresse IP examinée. L'étape 47 se poursuit, en cas de succès du test, par l'étape 49 et, en cas d'échec, par une étape 48 d'interrogation de l'utilisateur du PC 1 pour savoir s'il faut quand même activer la carte 4. Si oui, on passe à l'étape 49 et, sinon, on reboucle à l'étape 40 pour sélectionner une autre adresse IP apparue, c'est-à-dire activée.

Ainsi, si par exemple l'utilisateur se connecte par le port 9 à un réseau local comme ETHERNET, il répondra, à l'étape 45, de répudier systématiquement à l'avenir (42) cette adresse.

Si, au contraire, c'est le modem 8 qui appelle le fournisseur de services INTERNET 21, et que donc une nouvelle adresse IP est activée, il peut y avoir activation automatique (43) si toutes les autres adresses IP sont répudiées.

Pour faciliter l'établissement de la corrélation entre les ports 8 (associé logiquement à la carte 4), 9, 10 et les adresses IP, on va ici modifier l'état du système de ports par émission d'un stimulus. Cela consiste à émettre un message sur l'INTERNET 20 et à vérifier qu'une réponse à ce message est bien reçue par diffusion, donc que l'adresse IP sur la liaison de sélection 26 est bien celle connue de l'INTERNET 20.

On peut même simplement appeler le concentrateur 21 depuis le PC 1 pour en recevoir une adresse activée d'identification temporaire dans l'INTERNET 20 et ainsi favoriser la recherche de corrélation.

On peut en particulier émettre, sur l'INTERNET 20, un message comportant un nom de serveur dont on demande l'adresse IP. Cette émission est donc autonome vis-à-vis de l'INTERNET en ce sens que les adresses IP de serveurs sont inutiles. Le serveur 23, appelé Serveur de Noms Dynamique (DNS) et permettant d'appeler ou adresser un utilisateur INTERNET d'après son nom, contient une table fournissant des adresses de divers serveurs d'après leur nom. Il est ainsi appelé implicitement de par la question et va alors répondre par le satellite 30, si bien que la réception de la réponse par le PC 1 permet de valider l'adresse IP de la liaison 26.

Cependant, on ne peut répéter à l'identique un tel appel car, dans le PC 1, le logiciel de gestion des échanges avec l'INTERNET le détecterait et fournirait lui-même la réponse, qu'il a mémorisée, bloquant tout envoi de messages. De ce fait, pour que le message-stimulus puisse toujours être émis, on émet un nom de serveur inexistant ou bien on fait varier, d'un appel à l'autre, le nom émis. Le serveur DNS 23 diffuse alors par le satellite 30 une réponse indiquant qu'il ignore le nom ou bien fournissant une adresse IP. Le PC 1 invalide l'adresse IP de la liaison 26 si aucune réponse n'est reçue après un délai déterminé.

En variante, au lieu d'émettre avec certitude un message sur l'INTERNET 20, pour vérifier ensuite que la liaison de retour par diffusion est bien établie par l'adresse IP 1 de sélection de la liaison 26, on peut encore émettre un message d'interrogation de serveur comme 23, en utilisant une adresse IP nouvellement activée. Le message-stimulus est donc émis à travers l'un des ports 8 à 10, a priori inconnu de l'utilisateur.

S'il s'agit du port ou modem 8, la réponse satellite du serveur 23 est bien reçue par le PC 1. Si, au contraire, le message-stimulus est allé se "perdre" dans l'un des deux autres réseaux des ports 9 et 10, les éventuels serveurs DNS de ceux-ci ne peuvent accéder au satellite 30 et ainsi, faute de réponse, le PC 1 détecte que l'adresse IP apparue n'est pas l'adresse du port 8, utilisé pour communiquer avec INTERNET.

On peut encore, en outre, envoyer un message sur l'un des réseaux des ports 9 et 10, non INTERNET, et ainsi créer un stimulus produisant une adresse IP active dont on détecte l'apparition (étape 40) et que l'on rejette, ou répudie (étape 45).

## Revendications

1. Procédé de liaison (4) entre un appareil de transmission de données (1) et au moins un serveur (22) accessible à celui-ci par un réseau de transmission de données à commutation TDC (20) auquel est raccordée une ligne de transmission de données (15) reliée à l'appareil (1), procédé dans lequel on relie l'appareil (1) au réseau TDC (20) par la ligne de transmission de données (15) exclusivement en émission, et par un réseau de diffusion (30) exclusivement en réception, procédé **caractérisé par le fait que**, une adresse (IP1) d'identification de l'appareil (1) étant fournie à l'appareil (1) par le réseau TDC (20),
- on transmet au serveur (22), depuis l'appareil (1), un message d'interrogation comportant ladite adresse (IP1) d'identification de l'appareil, fournie à l'appareil par le réseau TDC,
- le serveur (22) transmet, au réseau de diffusion (30), une réponse correspondante comportant ladite adresse (IP1), et
- on détecte, dans l'appareil (1), la réponse diffusée, en sélectionnant celle des réponses qui comporte l'adresse (IP1) de l'appareil (1), parmi un ensemble de réponses comprenant aussi des réponses à d'autres appareils.

2. Procédé selon la revendication 1, dans lequel, l'appareil (1) disposant d'au moins une autre adresse (IP), pour une autre liaison (9; 10) avec un réseau autre,
- on détecte cycliquement l'état, actif ou repos, de chaque adresse (IP),
- on détecte cycliquement l'état, actif ou repos, de chaque liaison (4, 9, 10),
- on recherche une corrélation temporelle entre l'état de chaque adresse (IP) et l'état de chaque liaison (4, 9, 10), et
- on associe chaque adresse (IP) à celle des liaisons (4, 9, 10) qui présente avec elle la meilleure corrélation, pour déterminer l'adresse de réception (IP1) à utiliser sur le réseau de diffusion (30).

3. Procédé selon la revendication 2, dans lequel on établit cycliquement, dans l'appareil (1), une liste des adresses ayant, d'un cycle à l'autre, changé d'état, actif au repos, on recherche, dans les adresses passées à l'état repos, l'adresse de la liaison de réception par diffusion (4) pour mettre la liaison (4) au repos si elle est active, tandis que, si la liaison de réception (4) est au repos, on cherche à l'activer en lui artribuant l'adresse ou l'une des adresses passées à l'état actif.

4. Procédé selon l'une des revendications 2 et 3, dans lequel on détecte l'activation de l'adresse l'autre liaison (9; 10) et on mémorise cette adresse pour la rejeter comme n'étant pas l'adresse (IP1) de réception sur le réseau de diffusion (30).

5. Procédé selon l'une des revendications 2 à 4, dans lequel, le réseau à commutation (20) étant l'INTERNET, et l'appareil (1) y étant relié à travers un concentrateur d'accès (21), on appelle le concentrateur (21) depuis l'appareil (1) pour en recevoir une adresse activée (TP1) d'identification temporaire dans l'INTERNET (20) et ainsi favoriser la recherche de corrélation.

6. Procédé selon l'une des revendications 2 à 5, dans lequel le réseau à commutation (20) étant l'INTERNET, on vérifie la validité de l'adresse de diffusion (IP1) de l'appareil (1) par appel, depuis celui-ci, d'un serveur de renseignements (23) et vérification de la réception d'une réponse diffusée comportant ladite adresse (IP1).

7. Procédé selon la revendication 6, dans lequel, le serveur de renseignements (23) fournissant des adresses de divers serveurs d'après leur nom, on appelle implicitement le serveur de renseignements (23) par émission sur le réseau TDC (20), d'un nom de serveur.

8. Procédé selon la revendication 7, dans lequel on émet un nom de serveur inexistant.

9. Procédé selon la revendication 7, dans lequel on fait varier, d'un appel au suivant, le nom émis.

## Patentansprüche

1. Verbindungsverfahren (4) zwischen einem Datenübertragungsgerät (1) und mindestens einem Server (22), auf den dieses über ein Vermittlungsdatenübertragungsnetz TDC (20) zugreifen kann, an das eine Datenübertragungsleitung (15) angeschlossen ist, die mit dem Gerät (1) verbunden ist, Verfahren, bei dem das Gerät (1) an das TDC-Netz (20) über die Datenübertragungsleitung (15) ausschließlich beim Senden, und über ein Übermittlungsnetz (30) ausschließlich beim Empfang verbunden wird, wobei das Verfahren **dadurch gekennzeichnet ist, dass** eine Kennungsadresse (IP1) des Geräts (1) dem Gerät (1) über das TDC-Netz (20) geliefert wird,
- dem Server (22) vom Gerät (1) eine Abfragenachricht gesendet wird, die die Kennungsadresse (IP1) des Geräts, die dem Gerät über das TDC-Netz gesendet wurde, enthält,
- der Server (22) dem Übermittlungsnetz (30) eine entsprechende Antwort sendet, die die Adresse (IP1) enthält, und
- im Gerät (1) die übermittelte Antwort erfasst wird, indem diejenige der Antworten aus einer Gruppe von Antworten, die auch Antworten an weitere Geräte enthält, ausgewählt wird, die die Adresse (IP1) des Geräts (1) enthält.

2. Verfahren nach Anspruch 1, bei dem, wobei das Gerät (1) über mindestens eine weitere Adresse (IP) für eine weitere Verbindung (9; 10) mit einem weiteren Netz verfügt,
- der aktive oder Ruhezustand jeder Adresse (IP) zyklisch erfasst wird,
- der aktive oder Ruhezustand jeder Verbindung (4, 9, 10) zyklisch erfasst wird,
- eine zeitliche Korrelation zwischen dem Zustand jeder Adresse (IP) und dem Zustand jeder Verbindung (4, 9, 10) wiederholt analysiert wird, und
- jede Adresse (IP) mit derjenigen der Verbindungen (4, 9, 10) verbunden wird, die die beste Korrelation mit dieser darstellt, um die Empfangsadresse (IP1) zu bestimmen, die im Übermittlungsnetz (30) verwendet werden soll.

3. Verfahren nach Anspruch 2, bei dem zyklisch im Gerät (1) eine Liste der Adressen erstellt wird, die von einem Zyklus zum nächsten vom aktiven in den Ruhezustand übergegangen sind, in den in den Ruhezustand übergegangenen Adressen die Adresse der Übermittlungsempfangsverbindung (4) analysiert wird, um die Verbindung (4), falls sie aktiv ist, in den Ruhezustand zu versetzen, während, falls sich die Empfangsverbindung (4) im Ruhezustand befindet, danach gestrebt wird, sie zu aktivieren, indem ihr die Adresse oder eine der Adressen zugeteilt wird, die in den aktiven Zustand übergegangen ist/sind.

4. Verfahren nach einem der Ansprüche 2 und 3, bei dem die Aktivierung der Adresse der weiteren Verbindung (9; 10) erfasst und diese Adresse gespeichert wird, um sie zurückzuweisen, wenn sie nicht die Empfangsadresse (IP1) im Übermittlungsnetz (30) ist.

5. Verfahren nach einem der Ansprüche 2 bis 4, bei dem, da das Vermittlungsnetz (20) das INTERNET und das Gerät (1) damit über einen Zugangskonzentrator (21) verbunden ist, der Konzentrator (21) vom Gerät (1) aufgerufen wird, um von diesem eine aktivierte temporäre Kennungsadresse (IP1) im INTERNET (20) zu erhalten und somit die Korrelationsanalyse zu begünstigen.

6. Verfahren nach einem der Ansprüche 2 bis 5, bei dem, da das Vermittlungsnetz (20) das INTERNET ist, von diesem aus die Gültigkeit der Übermittlungsadresse (IP1) des Geräts (1) durch Aufruf eines Auskunftsservers (23) und Überprüfung des Empfangs einer übermittelten Antwort überprüft wird, die die Adresse (IP1) enthält.

7. Verfahren nach Anspruch 6, bei dem, da der Auskunftsserver (23) Adressen verschiedener Server deren Namen nach liefert, der Auskunftsserver (23) implizit durch Senden eines Servernamens über das TDC-Netz (20) aufgerufen wird.

8. Verfahren nach Anspruch 7, bei dem ein nicht existierender Servername gesendet wird.

9. Verfahren nach Anspruch 7, bei dem von einem Aufruf zum nächsten der gesendete Name verändert wird.

## Claims

1. Method of connection (4) between a data transmission unit (1) and at least one server (22) accessible to it by a data transmission switching [TDC] network (20) to which is connected a data transmission line (15) connected to the unit (1), a method in which the unit (1) is connected to the TDC network (20) by the data transmission line (15) exclusively on transmission, and by a dissemination network (30) exclusively on receiving, method **characterised in that**, an address (IP1) for identifying the unit (1) being supplied to the unit (1) by the TDC network (20),
- an inquiry message is sent to the server (22) from the unit (1) comprising the said address (IP1) identifying the unit, supplied to the unit by the TDC network,
- the server (22) sends a corresponding reply to the dissemination network (30) consisting of the said address (IP1), and
- the disseminated reply is detected in the unit (1) by selecting the one reply which contains the address (IP1) of the unit (1) from among a number of replies also including replies to other units.

2. Method according to Claim 1 wherein, the unit (1) having at least one other address (IP) for another link (9; 10) with another network,
- the state, active or at rest, of each address (IP) is cyclically detected,
- the state, active or at rest, of each link (4, 9, 10) is cyclically detected,
- a time correlation between the state of each address (IP) and the state of each link (4, 9, 10) is tracked down, and
- each address(IP) is associated with that of the links (4, 9, 10) which has the best correlation with it in order to determine the receiving address (IP1) to be used on the dissemination network (30).

3. Method according to Claim 2, in which, in the unit (1), a list of addresses is cyclically drawn up which has, from one cycle to another, changed state, active to at rest, and in the addresses which have gone over to the at rest state, the address of the receiving link by dissemination is sought in order to put the link (4) at rest if it is active while, if the receiving link (4) is at rest, it is sought to activate it by attributing to it the address or one of the addresses which have changed to the active state.

4. Method according to one of the Claims 2 and 3 whereby the activation of the address of the other link (9; 10) is detected and this address is memorised in order to reject it as not being the receiving address (IP1) on the dissemination network (30).

5. Method according to one of the Claims 2 to 4 whereby, the switching network (20) being the INTERNET, and the unit (1) being connected to it through an access concentrator (21), the concentrator (21) is called from the unit (1) in order to receive from it a temporary activated identification address (IP1) in the INTERNET (20) and thus assist the search for correlation.

6. Method according to one of the Claims 2 to 5 whereby, the switching network (20) being the INTERNET, the validity of the dissemination address (IP1) of the unit (1) is checked by calling from the latter an information server (23) and verifying the receiving of a disseminated reply containing the said address (IP1).

7. Method according to Claim 6 whereby, with the information server (23) supplying the addresses of various servers from their names, the information server (23) is called implicitly by transmitting a server's name on the TDC network (20).

8. Method according to Claim 7 whereby a non-existent server's name is sent.

9. Method according to Claim 7 whereby, from one call to the next, the name sent is changed.
